# NOUVEAU FASCICULE DE BREVET EUROPEEN

(11) **EP 0 726 739 B2**
(45) Date de publication et mention de la décision concernant l'opposition: **09.03.2005**
(45) Mention de la délivrance du brevet: 26.08.1998
(21) Numéro de dépôt: 94928916.9
(22) Date de dépôt: 26.09.1994
(51) Int. Cl.: A61C 5/10

(54) **PROTHESE DENTAIRE A COQUE DE SUPPORT COMPOSITE ET REVETEMENT, PIECE DE TISSU PREIMPREGNE ET PROCEDE DE FABRICATION**
DENTALE PROTHESE MIT SCHALENÄHNLICHER ZUSAMMENGESETZTER STÜTZE UND ÜBERZUG AUSVORIMPRÄGNIERTEM GEWEBESTÜCK SOWIE VERFAHREN ZUR HERSTELLUNG
DENTAL PROSTHESIS WITH COMPOSITE SUPPORT SHELL AND COATING, PREIMPREGNATED FABRIC PART AND MANUFACTURING METHOD

(30) Priorité: 24.09.1993 FR 9311414
(43) Date de publication de la demande: 21.08.1996
(60) Demande divisionnaire: 98200269.3
(73) Titulaire: Billet, Gilles, F-38500 Voiron (FR); Clunet-Coste, Bruno, F-38960 Saint-Etienne-de-Crossey (FR); Maneuf, Bernard, 38500 Voiron (FR)
(72) Inventeur: Billet, Gilles, F-38500 Voiron (FR); Clunet-Coste, Bruno, F-38960 Saint-Etienne-de-Crossey (FR); Maneuf, Bernard, 38500 Voiron (FR)
(74) Mandataire: Hecké, Gérard
(86) Numéro de dépôt international: PCT/FR1994/001119
(87) Numéro de publication internationale: WO 1995/008300

(56) Documents cités:
- EP-A- 0 432 001
- FR-A- 2 090 395
- GB-A- 2 018 666
- US-A- 4 404 150
- US-A- 5 120 224
- The use of continus fiber reinforcement in dentistry by AJ Goldberg and CJ Burstone Dental Materials, May 1992, pages 197-202.

## Description

L'invention concerne une prothèse dentaire telle qu'une couronne, un bridge, une prothèse implantée, une dent artificielle ou un dentier amovible, c'est-à-dire une prothèse destinée à reconstituer la forme et les caractéristiques d'au moins une dent à partir d'un moignon naturel (couronne posée en bouche sur la dente d'origine), implantaire (couronne placée sur un implant en bouche) ou modèle de laboratoire représentatif des tissus mous (dentier).

Les prothèses dentaires connues sont réalisées sous forme d'une coque en une seule pièce en métal ou en matériau composite (WO-A-8904640) ou en résine, ou encore avec une coque ou une armature généralement métallique recouverte de céramique ou de résine. Egalement, FR-A-2588181 préconise l'utilisation de matériau composite, pour réaliser des tenons pour inlays de reconstitution, des cupules, des bridges ou des implants.

Le document US5176951 décrit une méthode d'imprégnation manuelle de tissus de fibres, leur incorporation dans la partie résineuse d'une structure, puis leur recouvrement avec un matériau composite ou une résine. Il s'agit d'une méthode de renforcement de dispositifs dentaires et de prothèses faisant usage d'un tissu de fibres prédécoupé à partir d'un ruban sec. La pièce de tissu peut être préimprégnée de résine. L'application de cette pièce de tissu s'effectue manuellement, après avoir entreposé une première couche de résine entre le tissu et le modèle. Le tissu de fibres sert à renforcer un élément en résine existant, mais la résine n'est présente que dans une certaine partie nécessitant un renfort.

Selon US-A-5062799, un revêtement externe de finition recouvre la coque de support, laquelle est composée d'un matériau composite comprenant une armature de fibres noyées dans une matrice.

Le document FR-A-2090395 concerne un dispositif pour la fabrication de prothèses dentaires, ayant une enceinte hermétique, une platine de réception d'un modèle de formage dans l'enceinte, une membrane souple imperméable à un fluide séparant l'enceinte de deux chambres, et des moyens de réticulation des pièces placées sur le modèle de formage.

Dans l'art antérieur, on a toujours recherché à réaliser ces prothèses, et plus particulièrement leurs éléments constitutifs internes (coques, armatures métalliques, tenons, cupules ...) dans des matériaux aussi rigides que possible. Ainsi, WO-A-8904640 préconise de réaliser les prothèses dentaires en matériau composite avec une plus grande rigidité et résistance et plus généralement des caractéristiques mécaniques plus grandes que celles des polymères généralement utilisés. Plus particulièrement, ce document préconise d'utiliser un matériau composite dont le module d'élasticité est supérieur à 3,45 GPa. Egalement, FR-A-2588181 préconise d'utiliser des matériaux composites renforcés par des fibres de résistance élevée, notamment des fibres de carbone avec une matrice plus particulièrement en résine époxy ou polyester afin de procurer à la prothèse une rigidité élevée. En effet, les qualités essentielles bien connues d'une dent ou d'une prothèse dentaire sont d'une part de ne pas casser sous l'effet des chocs, d'autre part de ne pas s'user trop vite. Or, pour réaliser ces qualités, on a cherché jusqu'à maintenant essentiellement à renforcer la rigidité des prothèses.

Néanmoins, les prothèses entièrement métalliques sont peu esthétiques, les prothèses entièrement en résine s'avèrent fragiles à l'usage, celles réalisées par une coque ou armature métallique revêtue de céramique sont extrêmement onéreuses, longues et délicates à fabriquer, et celles réalisées à partir d'une coque ou armature métallique revêtue d'une résine sont également longues à fabriquer et sujettes à des détériorations à l'usage compte tenu de la mauvaise adhérence de la résine sur les armatures ou coques en métal et de la concentration des contraintes aux interfaces de matériaux ayant des caractéristiques mécaniques très différentes (métal/résine).

Or, les inventeurs ont déterminé que pour avoir des qualités mécaniques satisfaisantes, une prothèse dentaire doit le plus possible imiter ou reproduire la dent naturelle qui comprend une cavité pulpaire entourée de dentine et d'un revêtement en émail. Ainsi, il est important que la prothèse soit constituée de deux parties distinctes dont les caractéristiques mécaniques sont différentes, à savoir un revêtement dur et résistant à l'abrasion, et une coque ou armature de support dont les caractéristiques sont déterminées pour que le revêtement dur ne casse pas, soit associé rigidement au moignon tout en reproduisant les caractéristiques mécaniques en dynamique et statique de la dent naturelle.

L'invention vise donc à proposer une prothèse dentaire comprenant une coque de support et un revêtement externe de finition recouvrant cette coque de support qui ne présente pas les inconvénients susmentionnés de l'état de la technique, c'est-à-dire avec laquelle le revêtement adhère parfaitement a la coque de support, les caractéristiques mécaniques et physico-chimiques respectives du revêtement et de la coque de support pouvant être déterminées indépendamment selon leurs contraintes respectives propres.

L'invention vise également à proposer une prothèse dentaire qui reproduit le plus possible les caractéristiques mécaniques de la dent naturelle, et qui est par ailleurs biocompatible et facile à fabriquer.

L'invention vise en particulier à proposer une prothèse dentaire qui soit parfaitement résistante à l'usure, qui ne se casse pas à l'usage, et qui soit compatible avec l'environnement biologique de la dent, notamment qui préserve l'os contre les chocs et évite les phénomènes d'ostéolyse ou de descellement ou de décollement, notamment au niveau du collet de la dent ...

L'invention vise également à proposer une telle prothèse qui permette de conserver le plus possible les sensations proprioceptives du patient.

L'invention vise également à proposer une prothèse dentaire qui respecte les contraintes d'esthétique et dont l'état de surface peut imiter celui d'une dent naturelle.

L'invention vise également à proposer une telle prothèse qui simultanément ne comporte pas de métal.

L'invention vise également à proposer une pièce de tissu préimprégné de matrice organique avant réticulation destinée à la fabrication d'une prothèse selon l'invention.

L'invention vise également à proposer un procédé de fabrication d'une prothèse selon l'invention particulièrement simple, rapide à mettre en oeuvre et qui permette d'économiser du temps de main d'oeuvre, donc de réduire le prix de revient de la prothèse.

Selon l'invention, ces objectifs sont atteints par les revendications annexées. Plus particulièrement, l'invention concerne une prothèse dentaire destinée à recouvrir un moignon naturel, implantaire ou artificiel, comprenant une coque de support recouverte par un revêtement externe de finition composé d'au moins une couche comprenant un matériau dont au moins un composant essentiel est de même nature qu'au moins un composant essentiel d'une matrice de la coque de support, la coque de support destinée à venir en contact avec le moignon étant constituée par une pièce de tissu préimprégnée, formant un matériau composite constitué par une armature de fibres noyée dans ladite matrice. La prothèse dentaire est caractérisée en ce que la matrice est chargée, la coque de support présentant un module d'élasticité compris entre 7 GPa et 25 GPa, et le revêtement externe de finition étant dur et résistant à l'abrasion et ayant un module d'élasticité supérieur à 10 GPa.

L'utilisation conjointe d'un matériau composite pour la coque de support et d'une résine organique de même nature pour le revêtement permet d'adapter les caractéristiques mécaniques (module d'élasticité, limite élastique, résistance en traction et en compression, ...) aussi bien de la coque de support que du revêtement, indépendamment l'un de l'autre, mais tout en assurant une parfaite cohésion du revêtement sur la coque de support et une adhérence sans dissociation possible.

Selon l'invention le (les) composant(s) principal(aux) de la résine cosmétique et de la matrice organique sont similaires ou identiques. Plus particulièrement et selon l'invention la matrice de la coque de support et le revêtement externe de finition sont essentiellement constitués d'au moins une résine méthacrylate, notamment diméthacrylate. Selon l'invention, on peut utiliser une résine formée de dérivés du BIS phénol A, notamment le BIS-Gma (BIS-phénol A - glycidyl dimétacrylate). Toute autre résine organique peut être utilisée dès lors qu'elle est biocompatible, qu'elle permet la réalisation du revêtement et d'une matrice de matériau composite aptes à réaliser les caractéristiques mécaniques requises, et que la présence d'au moins un composant commun dans la matrice et dans la résine du revêtement permette une cohésion et une adhésion forte l'un sur l'autre par interaction chimique.

Selon l'invention, le module d'élasticité de la coque de support n'est jamais différent de celui de la dentine naturelle coronaire ou radiculaire de ± 25 %. Plus particulièrement, et selon l'invention, le module d'élasticité de la coque de support est inférieur ou égal à 25 GPa, notamment compris entre 7 et 25 GPa alors que le module d'élasticité du revêtement est supérieur à 10 GPa, notamment compris entre 12 et 26 GPa. Par ailleurs, la coque de support a une résistance en traction supérieure à 120 MPa - notamment de l'ordre de 200 MPa -, et une résistance en compression comprise entre 300 et 400 MPa. Et le revêtement externe de finition à une dureté supérieure à 100 KHN.

Selon l'invention, l'armature de la coque de support est composée d'au moins une couche de tissu maillé de fibres, notamment d'un stratifié composé d'une pluralité de couches de tissu maillé de fibres, notamment de fibres de verre, de céramique ou de silice.

L'invention concerne également un procédé de fabrication d'une telle prothèse dentaire recouvrant un moignon naturel, implantaire ou artificiel. Le procédé de fabrication est caractérisé en ce que :
- on place une pièce de tissu préimprégnée d'une matrice chargée, sur un modèle de formage, reproduisant le moignon naturel, implantaire ou artificiel,
- on forme une coque de support, recouvrant le modèle de formage, par compression, puis par durcissement de la matrice de la pièce de tissu préimprégnée,
- on réalise des couches successives de revêtement sur la coque de support pour former un revêtement externe de finition, dans lequel le revêtement est composé d'au moins une couche de matériau dont au moins un composant essentiel est de même nature qu'au moins un composant essentiel de la matrice.

D'autres caractéristiques et avantages de l'invention apparaîtront à la lecture de la description suivante qui se réfère aux figures annexées dans lesquelles :
La figure 1 est une vue en coupe verticale d'une dent équipée d'une prothèse dentaire selon l'invention.
La figure 2 est une vue en élévation d'une pièce de tissu préimprégné selon l'invention au cours d'une étape du procédé de fabrication selon l'invention.
La figure 3 est une vue similaire à la figure 2 illustrant une étape ultérieure du procédé de fabrication selon l'invention.
La figure 4 est une vue schématique en section verticale d'une machine du procédé;
La figure 5 est une vue en perspective illustrant les différents composants d'une pièce de tissu préimprégné selon l'invention.

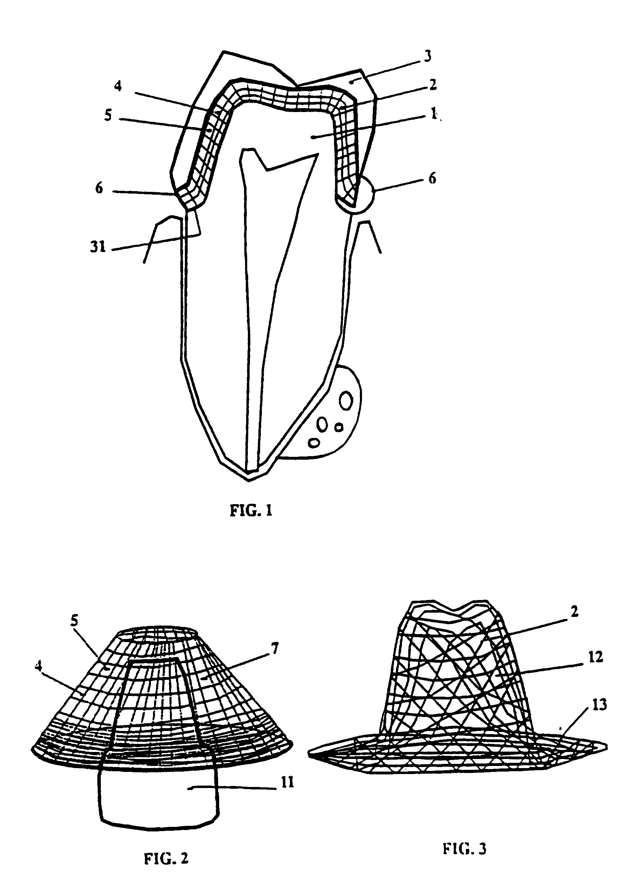

Sur la figure 1, on a représenté une prothèse dentaire selon l'invention posée sur un moignon naturel 1 de dentine taillée en bouche pour recevoir la prothèse. Celle-ci est constituée d'une coque de support 2 recouvrant le moignon naturel 1 et d'un revêtement externe de finition 3 recouvrant la coque de support 2. La coque de support 2 est composée d'un matériau composite conprenant une armature de fibres 4 noyée dans une matrice organique 5. Et le revêtement 3 est composé d'au moins une couche de résine organique dont au moins un composant essentiel est de même nature qu'au moins un composant essentiel de la matrice organique 5 de sorte que cette résine organique adhère par interaction chimique sur le matériau composite de la coque de support 2.

Dans tout le texte, on entend par "composant essentiel" un composant dont la concentration dans la matrice ou la résine est supérieure à 10 %. Et on entend par l'expression "de même nature" le fait que les composants sont identiques ou qu'ils appartiennent à la même famille chimique de sorte qu'ils peuvent interagir l'un avec l'autre en formant après réticulation une structure solide homogène.

Selon l'invention, la résine organique du revêtement et la matrice de la coque de support ont donc au moins un composant en commun. De préférence et selon l'invention, le (les) composant(s) principal(aux) de la résine et de la matrice sont de même nature, notamment similaires ou identiques.

Toute sorte de résine organique constitutive du revêtement et de matériaux composites constitutifs de la coque de support 2 peut être utilisée dès lors que la prothèse résultante a des caractéristiques mécaniques d'esthétique, et de biocompatibilité satisfaisantes. Néanmoins, les résines organiques utilisées pour le revêtement de finition dentaire sont généralement des résines constituées d'une base organique et de charges ou microcharges. Selon l'invention, la matrice organique constitutive de la coque de support 2 est également une résine organique constituée de la même base que celle du revêtement 3, et de charges ou de microcharges appropriées pour faciliter sa mise en oeuvre et lui conférer des caractéristiques mécaniques appropriées.

Selon l'invention, la matrice 5 de la coque de support 2 et le revêtement 3 externe de finition sont essentiellement constitués d'au moins une résine méthacrylate, notamment diméthacrylate.

Selon l'invention, la matrice de la coque de support 2 comporte au moins un composant essentiel choisi dans le groupe constitué des résines aromatiques à base de diméthacrylate, des résines aromatiques à base époxy et des résines polyméthacrylates. Selon l'invention, la matrice 5 peut également comporter des résines méthacrylates uréthannes. Parmi les résines aromatiques diméthacrylates, on peut utiliser notamment les dérivés du BIS phénol A, tel que le bisphénol A-glycidyl-diméthacrylate (BIS-GMA) et/ou d'autres monomères tels qu'un uréthane-diméthacrylate (UDMA) et/ou un triéthylène-glycol-diméthacrylate (TEDMA).

Selon l'invention, on peut utiliser une résine à base de BIS-GAM modifiée par copolymérisation avec des composés de plus bas poids moléculaire, notamment à titre non limitatif des bisphénol glycidyl-diméthacrylates (BIS-MA), des bisphénol-éthyl-méthacrylates (BIS-EMA), des bisphénol-propyl méthacrylates (BIS-PMA), des éthylène-glycol-diméthacrylates (EGDMA), des diéthylène-glycol-diméthacrylates (DEGDMA), des triéthylène-glycol-dimêthacrylates (TEGMA), des triéthylène-glycol-méthacrylates (TEGMA), des méthyl-méthacrylates (MMA), et des polyuréthane -fluor-méthacrylates (PFUMA).

La matrice organique 5 composant la coque de support 2 comporte également des charges et notamment des composants photo-amorceurs tels que des dicétones, notamment la diacétyle et/ou des quinones tels que la camphoroquinone et l'acénaphtène quinone sensibles à la lumière visible ainsi que des accélérateurs, notamment des amines. Ainsi, la matrice organique selon l'invention peut être réticulée par éclairage en lumière visible.

Par ailleurs, le matériau composite de la coque de support 2 comporte une armature de fibres 4 composée d'au moins une couche de tissu maillé de fibres. Selon l'invention, le matériau composite de la coque de support 2 est un stratifié composé d'une pluralité de couches de tissu maillé de fibres, notamment de fibres de verre, de céramique ou de silice. On peut ainsi utiliser de deux à dix couches de tissu de fibres de verre E ou S ayant chacune une épaisseur de 0,1 mm.

A titre d'exemple non limitatif, un tissu maillé de fibres ayant les caractéristiques suivantes a donné de bons résultats :
Poids : 90 ± 5 g/m²
Armature : satin de 4
Composition :

| | |
|---|---|
| chaîne | EC 5 22 |
| trame | EC 5 22 |

Epaisseur du stratifié par pli : 0,09 mm
Module d'élasticité :

| | |
|---|---|
| chaîne | 18000 MPa environ |
| trame | 18000 MPa environ |

Résistance en traction :

| | |
|---|---|
| chaîne | 200 MPa |
| trame | 200 MPa |

Pour un stratifié à 50 % de renfort en volume.

Egalement, outre l'armature 4 de fibres, le matériau composite selon l'invention comporte également d'autres charges inorganiques. En particulier, on peut incorporer des charges destinées à modifier la fluidité et la pégosité de la matrice 5 telles que des particules à base de silice dont le diamètre peut varier de moins de 0,1 µm à 100 µm, par exemple la silice pyrolitique, et/ou des particules à base de verre ou de céramique, notamment des particules de verre ou de borosilicate, des verres de céramique, des particules de baryum-aluminium, strontium-aluminum, ... Egalement, on peut incorporer des métaux lourds radio-opaques, tels que le niobium, l'étain, le titane ..., ainsi que des pigments organiques ou minéraux destinés à assurer l'esthétique de la coque. Par ailleurs, toutes ces charges inorganiques (particules et fibres) sont traitées avant leur incorporation dans la matrice organique 5 grâce à des composés organo-silanes tels que des aryloxy-silanes et/ou halogéno-silanes.

Selon l'invention, la coque de support 2 comporte entre 40 et 80 % en volume de matrice organique. C'est-à-dire que les composés de résine aromatique de base et les charges organiques de photo-amorçage sont compris dans une proportion entre 40 et 80 % en volume du matériau composite. Et les charges inorganiques, à savoir l'armature 4 de fibres et les autres charges inorganiques sont comprises entre 20 et 60 % en volume du matériau composite.

Par ailleurs, le revêtement 3 externe de finition peut être constitué d'une résine chargée cosmétique, notamment du type constitué de dérivés du BIS-phénol A tel le BIS-GMA chargé de telle façon qu'il ait une haute rigidité, une grande résistance à l'abrasion ainsi qu'une teinte proche de la dent naturelle. De telles résines cosmétiques chargées sont connues en elles-mêmes.

L'invention concerne également une prothèse dentaire comprenant une coque de support 2 destinée à recouvrir un moignon 1 naturel, implantaire ou artificiel, et un revêtement 3 externe de finition recouvrant la coque de support 2, caractérisée en ce que le module d'élasticité de la coque de support 2 n'est jamais différent de celui de la dentine naturelle coronaire ou radiculaire de ± 25 %. Selon l'invention, le module d'élasticité de la coque de support 2 est inférieur ou égal à 25 GPa, notamment compris entre 7 et 25 GPa. Et le module d'élasticité du revêtement 3 externe de finition est supérieur à 10 GPa, notamment compris entre 12 et 26 GPa. De la sorte, la rupture de continuité des modules d'élasticité entre les différentes couches de matériaux existant dans les prothèses connues de l'état de la technique est supprimée. La dent reconstituée obtenue avec la prothèse dentaire selon l'invention telle que représentée à la figure 1 a donc des caractéristiques mécaniques similaires à celles d'une dent naturelle.

Par ailleurs, la coque de support 2 a une résistance en traction supérieure à 120 MPa - notamment de l'ordre de 200 MPa -. cette résistance en traction est particulièrement importante au niveau du collet 6 de la coque de support 2 qui, en pratique, est amené à résister à des contraintes en traction. Par ailleurs, et selon l'invention, la coque de support 2 a une résistance en compression comprise entre 300 et 400 MPa pour résister aux contraintes de compression engendrées par la mastication. Et le revêtement 3 externe de finition a une dureté supérieure à 100 KHN.

Ces caractéristiques mécaniques respectives du revêtement 3 de finition et de la coque de support 2 peuvent aisément être obtenues avec un choix approprié des éléments constitutifs du matériau composite constituant la coque de support 2 et de la résine organique du revêtement 3. En particulier, la proportion de fibres de verre et le nombre de couches de tissu utilisées, ainsi que le diamètre des fibres de verre influent sur le module d'élasticité de façon connue en soi.

Par ailleurs, selon l'invention, le revêtement 3 externe de finition vient adhérer à des fibres superficielles de l'armature 4 de fibres de la coque de support 2 qui affleurent ou saillent hors de la matrice organique 5 à la surface externe de la coque de support 2. De la sorte, la résine constituant le revêtement 3 vient adhérer directement sur des fibres de l'armature 4 qui apparaissent en surface, ce qui améliore la cohésion et l'adhérence. Ainsi, de tout ce qui précéde, on comprend que la cohésion et l'adhérence entre le revêtement 3 externe de finition et la coque de support 2 est réalisée de façon interne du fait de l'existence, en combinaison, d'une part d'un accrochage physique du fait de la pénétration du revêtement 3 externe de finition dans le réseau de fibres superficielles de l'armature 4 de fibres de la coque de support 2, et d'autre part d'une interaction chimique entre la matrice organique 5 de la coque de support 2 et la résine organique du revêtement 3 externe de finition.

Selon l'invention, la première couche de résine organique du revêtement 3 au contact de la coque de support 2 est constituée d'une résine formée du (des) composant(s) commun(s) du revêtement 3 de la matrice organique 5, c'est-à-dire d'une résine non chargée. En particulier, la première couche est constituée uniquement de résine méthacrylate ou diméthacrylate non chargée. Cette première couche de résine non chargée pénètre donc dans le matériau composant réalisant la coque de support 2 d'un côté et dans la première couche de résine chargée du revêtement 3 de l'autre côté. On obtient ainsi un mélange homogène et une bonne continuité due à la solution entre la coque de support 2 et le revêtement 3.

La coque de support 2 est elle-même montée sur le moignon 1 par l'intermédiaire d'un ciment de scellement 31 également à base de résine organique, notamment un anhydride acide-4-méthacryloxy-éthyl-trimellitate, amorcé par du tri-n-butyle qui assure l'étanchéité entre le moignon 1 et la prothèse (résines dites META4).

La dent munie d'une prothèse dentaire selon l'invention comporte donc, de l'extérieur vers l'intérieur, un revêtement 3 externe de finition cosmétique ayant une épaisseur comprise entre 0 et 2 mm, une coque de support 2 en matériau composite dont l'épaisseur peut varier entre 0,1 et 2 mm, une couche de ciment de scellement 31 dont l'épaisseur varie également entre 5 et 35 µm, et le moignon 1 en dentine naturelle ou en dentine reconstituée de matériau composite ou métallique.

Le matériau composite de la coque de support 2 peut être constitué de fibres autres que le verre, par exemple des fibres d'aramide (notamment Kévlar, marque déposée), de carbone, de bore, de silice ou de céramique. ... La matrice organique peut également être une matrice réticulable non pas par la lumière mais par un procédé thermique ou chimique ou autre. L'orientation, les dimensions, et le maillage des fibres constituant l'armature 4 sont adaptés en fonction des caractéristiques mécaniques susmentionnées désirées selon l'application de la prothèse. Selon l'invention, le collet 6 de la coque de support 2 a une épaisseur qui est la même que l'épaisseur courante de la coque de support 2 en dehors du collet 6. De plus, le maillage de l'armature de fibres peut être renforcé et resserré au voisinage du collet 6 afin d'augmenter la résistance en traction du matériau composite à cet endroit de la prothèse. En effet, on a déterminé que les contraintes les plus importantes subies par la prothèse sont généralement situées au niveau du collet 6.

L'invention permet également de réaliser des bridges en utilisation deux prothèses selon l'invention reliées par un élément de liaison reliant les deux coques de support 2. L'élément de liaison peut lui-même être constitué d'un matériau composite ou renforcé par un tissu ou des fibres.

L'invention concerne également une pièce 7 de tissu préimprégné d'une matrice organique avant sa réticulation qui est destinée à former après mise en forme, réticulation et pose d'un revêtement 3 externe de finition en résine organique, une coque de support 2 d'une prothèse dentaire selon l'invention. La pièce 7 selon l'invention est caractérisée en ce que la matrice organique a au moins un composant essentiel de même nature qu'au moins un composant essentiel du revêtement 3. La pièce 7 de tissu est prête à l'emploi pour former la coque de support 2 de la prothèse selon l'invention après sa réticulation. Elle comprend donc tous les composants constitutifs de la coque de support 2 de la prothèse selon l'invention. Ainsi, le (les composant(s) principal(aux) de la résine du revêtement 3 et de la matrice de la pièce 7 sont similaires. Et la matrice organique de la pièce 7 et la résine formant le revêtement sont essentiellement constituées d'au moins une résine méthacrylate, notamment diméthacrylate. L' armature de tissu 4 de la pièce 7 est composée d'au moins une couche de tissu maillé de fibres, notamment d'une pluralité, plus particulièrement entre 2 et 10 couches de tissu de fibres ayant chacune une épaisseur de l'ordre de 0,1 mm. De préférence, et selon l'invention on utilise des fibres de verre, de céramique ou de silice.

Selon l'invention, la pièce 7 a une forme générale de disque d'un diamètre de 10 à 100 mm emprisonné entre deux films protecteurs 8 et/ou entre deux membranes 9, 10 élastiques. La pièce de tissu peut aussi être de forme quelconque, l'utillsateur pouvant alors découper la pièce selon l'application qu'il compte en faire notamment pour constituer la liaison entre deux ou plusieurs coques de support pour constituer un bridge ou entier.

L'invention concerne également un procédé de fabrication d'une prothèse dentaire selon l'invention à partir d'une pièce de tissu préimprégné 7 selon l'invention. Selon l'invention, on place une pièce 7 de tissu préimprégné sur un modèle de formage 11 qui peut être soit une reproduction de moignon naturel, soit un moignon implantable, soit un modèle de prothèse mobile (par exemple dans le cas de la fabrication d'un dentier). On forme ensuite la pièce 7 de tissu préimprégné sur le modèle de formage 11 par compression en plaquant cette pièce 7 de tissu sur le modèle de formage 11. On réalise ensuite la réticulation de la matrice organique 5 de la pièce 7 de tissu préimprégné pour obtenir la coque de support 2 rigide. Et on réalise des couches successives de résine organique réticulée sur la coque de support 2 pour former un revêtement 3 externe de finition. Selon l'invention, pour former la pièce 7 de tissu préimprégné sur le modèle de formage 11, et la plaquer contre ce modèle de formage 11, on applique une membrane souple 9 imperméable à un fluide, notamment à l'air par pression du fluide différentielle sur la pièce 7 qui vient se plaquer sur le modèle de formage 11. Lors de cette étape, pour éviter la présence d'une ou de poches de fluide emprisonnée(s) entre le modèle de formage 11 et la membrane 9, on déplace progressivement et longitudinalement de haut en bas ou de bas en haut la membrane 9 sur la surface du modèle de formage 11, par application d'une différence maîtrisée de la pression différentielle. On peut préformer la pièce 7 avec sa partie centrale au moins sensiblement conique avant de la placer sur un modèle 11 en forme de moignon. De la sorte, la partie centrale tronconique repose sur le moignon 11, sans nécessiter de moyens de maintien spécifiques. En variante, on peut placer la pièce 7 de tissu préimprégné et la former sur le modèle de formage 11 en l'emprisonnant entre deux membranes souples 9, 10, imperméables à un fluide et en appliquant l'ensemble ainsi formé par pression du fluide différentielle de façon à le plaquer sur le modèle de formage 11. La plaque-base sur laquelle vont reposer les dents artificielles est fabriquée en une seule opération. La première variante susdécrite est plus préférentiellement applicable dans le cadre de la fabrication d'une prothèse dentaire unitaire.

Selon l'invention, on soumet la surface externe 12 de la coque de support 2 après sa réticulation à une abrasion ou une érosion avant la pose de la première couche de résine organique destinée à former le revêtement 3 pour faire apparaître les fibres de l'armature 4 de tissu en surface. De la sorte, la couche subséquente posée qui constitue la première couche formant le revêtement 3 vient en contact direct avec les fibres de l'armature 4. Et selon l'invention, la première couche de résine organique posée sur la coque de support 2 est constituée d'une résine formée du(des) composant(s) commun(s) du revêtement 3 et de la matrice organique 5, c'est-à-dire d'une résine non ou peu chargée.

La figure 2 représente la pièce 7 du tissu préimprégné préformée en forme générale de cône posé sur le modèle de formage 11 qui est un moignon artificiel reproduisant un moignon naturel. La figure 3 représente le résultat obtenu après avoir formé la pièce 7 de tissu imprégné sur le moignon 11 par pression différentielle. A partir de l'étape de la figure 3, on découpe la collerette en surplus 13 de la coque de support 2, ce qui doit être effectué impérativement avant extraction du moignon. On extrait ensuite la coque de support 2 rigide ainsi formée soit en la séparant simplement du moignon 11 si un film isolant a été interposé entre le moignon 11 et la pièce 7 de tissu imprégné, soit par dissolution chimique du matériau composant le moignon 11. On réalise ensuite une abrasion de la surface 12 externe de la coque de support 2 et on réalise des couches successives photo-polymérisées de résine cosmétique pour réaliser le revêtement 3 comme indiqué ci-dessus.

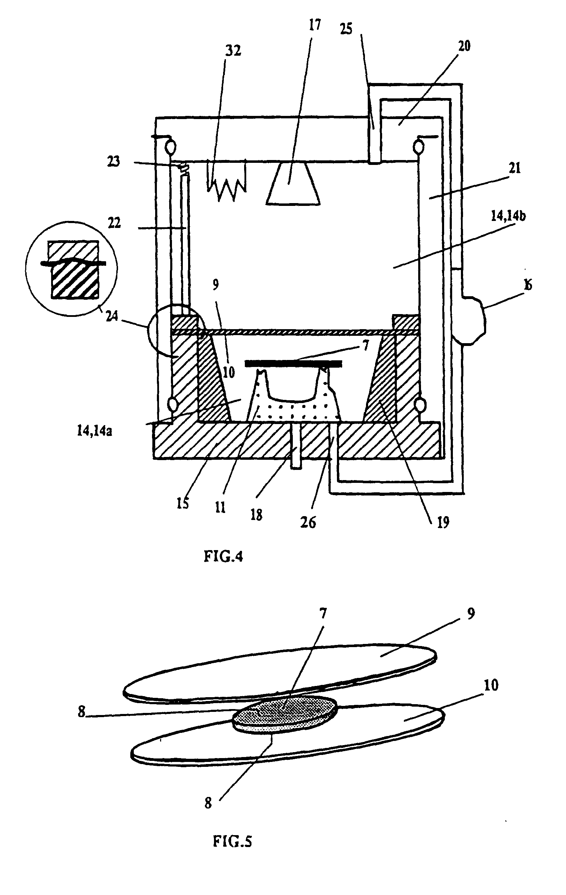

Sur la figure 4, la machine comporte une enceinte 14 hermétique, une platine 15 de réception d'un modèle de formage 11 dans l'enceinte 14, une membrane souple imperméable à un fluide 9, notamment à l'air, séparant l'enceinte 14 en deux chambres 14a, 14b, des moyens 16, 25, 26 pour créer une pression de fluide dans la chambre 14a contenant le modèle de formage 11 moins importante que dans l'autre chambre 14b, et des moyens 17, 18, 19, 32 de réticulation des pièces 7 placées sur le modèle de formage 11 dans la chambre 14a. Les moyens 17, 18, 19 de réticulation sont des moyens de photo-réticulation comprenant au moins une source de lumière 17 disposée dans la chambre 14b opposée à celle 14a contenant le modèle de formage 11. La membrane 9 souple séparatrice est alors translucide ou transparente, c'est-à-dire qu'elle laisse passer la lumière. Les moyens 17, 18, 19 de réticulation comprennent au moins un conduit de lumière 18 aboutissant sur la platine 15 de réception pour éclairer de l'intérieur le modèle de formage 11 réalisé lui-même en matériau translucide ou transparent. De la sorte, on réalise un éclairage de l'intérieur et on améliore l'efficacité de la photo-réticulation. Egalement, les moyens 17, 18, 19 de réticulation peuvent comporter un miroir périphérique 19 entourant le modèle de formage 11 pour améliorer la diffusion de la lumière.

L'enceinte 14 est constituée de la platine inférieure 15 de réception du modèle de formage 11, d'une platine similaire supérieure 20 parallèle formant couvercle, et d'un cylindre 21 interposé entre ces deux platines 15, 20 de manière hermétique au fluide. Le cylindre 21 peut être transparent afin de contrôler visuellement le déroulement du procédé de fabrication. La platine supérieure 20 supporte une pluralité de colonnettes 22 à ressorts de compression 23 régulièrement répartis à sa circonférence destinés à venir appuyer contre la bordure périphérique de la membrane 9 pour la coincer contre une protubérance cylindrique 24 de la platine inférieure 15. Les colonnettes 22, les ressorts 23 et la protubérance 24 constituent ainsi des moyens de fixation amovibles de la membrane 9 de séparation des deux chambres 14a, 14b. on peut ainsi aisément changer la membrane 9 en tant que de besoin à chaque démontage de la machine, c'est-à-dire à chaque préparation de fabrication d'une prothèse. La platine inférieure 15 est associée rigidement, de façon hermétique, mais de façon démontable au cylindre 21 afin de permettre le changement de la membrane 9 et/ou la préparation du modèle de formage 11 et des pièces 7 à polymériser. La source lumineuse 17 peut être constituée simplement d'une lampe électrique. La différence de pression entre les deux chambres 14a, 14b peut être réalisée par admission d'un fluide comprimé dans la chambre 14b par l'orifice et/ou par aspiration d'un fluide de la chambre 14a contenant le modèle de formage 11 à travers un orifice d'aspiration 26. Par exemple, on peut relier l'orifice d'aspiration 26 et l'orifice d'admission 25 l'un à l'autre par l'intermédiaire d'une pompe à fluide 16. Sous l'effet de la différence de pression ainsi réalisée, la membrane souple 9 vient se plaquer contre le modèle de formage 11 et plaque ainsi la pièce 7 de tissu préimprégné contre ce modèle de formage 11. On allume ensuite les moyens 17, 18 d'éclairage engendrant la photo-polymérisation de la matrice organique de la pièce 7 de tissu préimprégné et la formation de la coque de support 2. Le résultat obtenu est représenté à la figure 3. Sur la figure 4, on a représenté l'exemple de réalisation d'un dentier. Le modèle de formage 11 est alors un modèle de laboratoire pour dentier. La pièce 7 de tissu préimprégné est emprisonnée entre deux membranes 9, 10. La membrane supérieure 9 fait fonction de membrane séparant l'enceinte 14. Son diamètre correspond donc à celui de la machine. Son épaisseur peut être comprise entre 60 et 120 µm. Elle est constituée d'un matériau synthétique élastique tel qu'un copolymère. La membrane inférieure permet de maintenir la pièce 7 de tissu préimprégné avant la mise en fonction des moyens d'aspiration 16. Elle peut également être constituée d'une membrane translucide de 20 à 40 µm d'épaisseur en copolymère.

En pratique, on a pu réaliser une couronne dentaire prête à poser en bouche à partir d'une pièce 7 de tissu préimprégné, y compris les étapes terminales de polissage et finition avec trois couches de revêtement cosmétique en un temps approximatif de 30 minutes. Or, pour réaliser une couronne de même nature, les temps d'exécution sont de environ 1 h 15 mn pour une couronne métallique, 1 h 30 mn pour une couronne de résine à armature métallique et 2 h pour une couronne en céramique à armature métallique.

Une autre variante de l'invention consiste à réaliser une prothèse dentaire dans laquelle la coque de support 2 est composée d'un matériau composite comprenant une armature 4 en fibres de céramique noyée dans une matrice en poudre de céramique, et dans laquelle le ravêtement 3 est composé de poudre de céramique. Bien entendu, la composition de la poudre de céramique de la matrice et la composition de la poudre de céramique du revêtement sont telles qu'au moins un composant essentiel de la poudre de céramique de la matrice est de même nature qu'au moins un composant essentiel de la poudre de céramique du revêtement, conformément à l'une des caractéristiques essentielles de l'invention.

La poudre de céramique de la matrice et du revêtement peut inclure initialement un matériau servant de liant. Ce matériau peut être par exemple de l'eau, de l'alcool, une résine organique, etc.

Ce matériau sert initialement à donner à la poudre une consistance de pâte adaptée aux opérations initiales de mise en forme.

En outre, ce matériau sert ensuite à conférer à la poudre une dureté définitive, après cuisson ou polymérisation. Ainsi, ce matériau peut être choisi de façon à polymériser afin de durcir le produit. Dans ce cas, ce matériau peut être une résine organique polymérisable. Ce matériau peut aussi être choisi pour disparaître partiellement ou complètement lors de la cuisson. Dans ce cas, ce matériau peut être de l'eau, de l'alcool ou une résine organique.

## Revendications

1. Prothèse dentaire destinée à recouvrir un moignon (1) naturel, implantaire ou artificiel, comprenant une coque de support (2) recouverte par un revêtement externe de finition (3) composé d'au moins une couche comprenant un matériau dont au moins un composant essentiel est de même nature qu'au moins un composant essentiel d'une matrice (5) de la coque de support (2), la coque de support (2) destinée à venir en contact avec le moignon (1) étant constituée par une pièce de tissu (7) préimprégnée, formant un matériau composite constitué par une armature de fibres (4) noyée dans ladite matrice (5), prothèse dentaire **caractérisée en ce que** la matrice (5) est chargée, la coque de support (2) présentant un module d'élasticité compris entre 7 GPa et 25 GPa, et le revêtement externe de finition (3) étant dur et résistant à l'abrasion et ayant un module d'élasticité supérieur à 10 GPa.

2. Prothèse dentaire selon la revendication 1, **caractérisée en ce que** ladite matrice (5) est constituée d'un matériau organique chargé et **en ce que** le revêtement (3) externe est constitué de résine organique.

3. Prothèse dentaire selon la revendication 1, **caractérisée en ce que** ledit matériau composite comprend une armature de fibres de céramiques (4) noyée dans une matrice chargée (5), à base de poudre de céramique, et **en ce que** ledit revêtement (3) est constitué d'un matériau à base de poudre de céramique.

4. Prothèse dentaire selon l'une des revendications 1 à 3, **caractérisée en ce que** le (les) composant(s) principal (aux) du revêtement et de la matrice (5) sont de même nature.

5. Prothèse selon l'une des revendications 1 à 4, **caractérisée en ce que** le module d'élasticité de la coque de support (2) n'est jamais différent de celui de la dentine naturelle de plus ou moins 25 %.

6. Prothèse selon l'une des revendications 1 à 5, **caractérisée en ce que** le module d'élasticité du revêtement (3) est compris entre 12 et 26 GPa.

7. Prothèse selon l'une des revendications 1 à 6, **caractérisée en ce que** la coque de support (2) a une résistance en traction supérieure à 120 MPa.

8. Prothèse selon la revendication 7, **caractérisée en ce que** la coque de support (2) a une résistance en traction de l'ordre de 200 MPa.

9. Prothèse selon l'une des revendications 1 à 8, **caractérisée en ce que** la coque de support (2) a une résistance en compression entre 300 et 400 MPa.

10. Prothèse selon l'une des revendications 1 à 8, **caractérisée en ce que** le revêtement (3) externe de finition a une dureté supérieure à 100 KHN.

11. Prothèse selon l'une des revendications 1, 2, et 4 à 10, **caractérisée en ce que** la matrice chargée (5) de la coque de support (2) et le revêtement (3) sont essentiellement constitués d'au moins une résine méthacrylate, notamment diméthacrylate.

12. Prothèse selon l'une des revendications 1 à 11, **caractérisée en ce que** le revêtement (3) externe de finition vient adhérer à des fibres superficielles de l'armature (4) de la coque de support (2) qui affleurent ou saillent hors de la matrice chargée (5).

13. Prothèse selon l'une des revendications 1, 2 et 4 à 12, **caractérisée en ce que** la première couche de revêtement (3) au contact de la coque de support (2) est constituée d'une résine formée du (des) composant(s) commun(s) du revêtement (3) et de la matrice organique (5).

14. Prothèse selon l'une des revendications 1 à 13, **caractérisée en ce que** l'armature (4) de la coque de support (2) est composée d'au moins une couche de tissu maillé de fibres.

15. Prothèse selon la revendication 14, **caractérisée en ce que** le matériau composite de la coque de support (2) est un stratifié composé d'une pluralité de couches de tissu maillé de fibres.

16. Prothèse selon l'une des revendications 1 à 15, **caractérisée en ce que** les fibres de l'armature (4) de la coque de support (2) sont notamment des fibres de verre, de céramique, ou de silice.

17. Procédé de fabrication d'une prothèse dentaire, selon l'une quelconque des revendications 1 à 16, recouvrant un moignon (1) naturel, implantaire ou artificiel, **caractérisé en ce que** :
- on place une pièce de tissu (7) préimprégnée d'une matrice chargée (5), sur un modèle de formage (11), reproduisant le moignon (1) naturel, implantaire ou artificiel,
- on forme une coque de support, recouvrant le modèle de formage (11), par compression, puis par durcissement de la matrice (5) de la pièce (7) de tissu préimprégnée,
- on réalise des couches successives de revêtement sur la coque de support (2) pour former un revêtement externe (3) de finition, dans lequel le revêtement (3) est composé d'au moins une couche de matériau dont au moins un composant essentiel est de même nature qu'au moins un composant essentiel de la matrice (5).

18. Procédé selon la revendication 17, **caractérisé en ce que** l'on soumet la surface externe (12) de la coque de support (2) à une abrasion ou une érosion avant la pose de la première couche de revêtement externe de finition (3), pour faire apparaître les fibres de l'armature (4) de tissu en surface.

19. Procédé selon l'une des revendications 17 ou 18, **caractérisé en ce que** la première couche de revêtement externe de finition (3), posée sur la coque de support (2) est constituée d'une matière formée du (des) composant(s) commun(s) du revêtement (3) et de la matrice (5).

20. Procédé selon l'une des revendications 17 à 19, **caractérisé en ce que** pour former la pièce (7) de tissu préimprégné sur le modèle de formage (11), on applique une membrane souple (9) imperméable à un fluide par pression différentielle sur la pièce (7) préimprégnée qui vient se plaquer sur le modèle de formage (11).

21. Procédé selon la revendication 20, **caractérisé en ce que** pour éviter la présence d'une ou de poches de fluide emprisonnée(s) entre le modèle de formage (11) et la membrane (9), on déplace progressivement et longitudinalement la membrane (9) sur la surface du modèle de formage (11) par application d'une différence maîtrisée de la pression différentielle.

22. Procédé selon l'une des revendications 17 à 21, **caractérisé en ce que** l'on préforme la pièce (7) avec sa partie centrale au moins sensiblement conique avant de la placer sur un modèle (11) en forme de moignon.

23. Procédé selon l'une des revendications 17 à 22, **caractérisé en ce que** l'on place la pièce (7) et on la forme en l'emprisonnant entre deux membranes souples (9, 10) imperméables à un fluide, et en appliquant l'ensemble ainsi formé par pression différentielle d'un fluide de façon à la plaquer sur le modèle de formage (11).

## Patentansprüche

1. Dentale Prothese die dazu dient, einen natürlichen Stumpf (1), ein Implantat oder einen künstlichen Stumpf abzudecken und besteht aus einer schalenähnlichen Stützgerüst (2), das durch einen äusseren Endüberzug (3) bedeckt ist, der aus mindestens einer Schicht eines Materials besteht, in der mindestens eine der wesentlichen Komponenten gleicher Beschaffenheit ist wie mindestens eine der wesentlichen Komponenten einer Matrix (5) des schalenähnlichen Stützgerüsts (2), wobei der schalenähnlichen Stützgerüst (2), das in Kontakt mit dem Stumpf (1) kommen wird, aus einem vorimprägnierten Gewebestück (7) besteht, das einen aus einer in der Matrix (5) verschmolzenen Faserverstärkung (4) bestehenden Verbundwerkstoff bildet, dentale Prothese **dadurch gekennzeichnet, daß** die Matrix (5) angereichert wird und daß das schalenähnlichen Stützgerüst (2) ein Elastizitätsmodul von zwischen 7 und 25 Gpa aufweist und der äussere Endüberzug (3) hart und abrasionsfest ist und ein Elastizitätsmodul von über 10 GPa aufweist.

2. Dentale Prothese gemäß Anspruch 1, **dadurch gekennzeichnet, daß** genannte Matrix (5) aus einem angereicherten organischen Werkstoff besteht und daß genannter Überzug (3) aus einem organischen Harz besteht.

3. Dentale Prothese gemäß Anspruch 1, **dadurch gekennzeichnet, daß** besagter Verbundwerkstoff mit Keramikfaser (4) verstärkt ist, die in einer angereicherten Matrix (5) auf Keramikpulverbasis eingelegt ist, und daß besagter Überzug (3) aus einem Werkstoff auf Keramikpulverbasis besteht.

4. Dentale Prothese gemäß einer der Ansprüche 1 bis 3, **dadurch gekennzeichnet, daß** der (die) Hauptkomponent(en) des Überzugs und der Matrix (5) von gleicher Beschaffenheit sind.

5. Prothese gemäß einer der Ansprüche 1 bis 4, **dadurch gekennzeichnet, daß** der Elastizitätsmodul des schalenähnlichen Stützgerüsts (2) nie um mehr oder weniger 25% von dem des natürlichen Dentins abweicht.

6. Prothese gemäß einer der Ansprüche 1 bis 5, **dadurch gekennzeichnet, daß** der Elastizitätsmodul des Überzugs (3) zwischen 12 und 26 GPa liegt.

7. Prothese gemäß einer der Ansprüche 1 bis 6, **dadurch gekennzeichnet, daß** das schalenähnliche Stützgerüst (2) eine Zugfestigkeit von über 120 MPa aufweist.

8. Prothese gemäß Anspruche 7, **dadurch gekennzeichnet, daß** das schalenähnliche Stützgerüst (2) eine Zugfestigkeit in der Größenordnung von 200 MPa. aufweist

9. Prothese gemäß einer der Ansprüche 1 bis 8, **dadurch gekennzeichnet, daß** das schalenähnliche Stützgerüst (2) eine Druckbeständigkeit von 300 bis 400 MPa aufweist.

10. Prothese gemäß einer der Ansprüche 1 bis 8, **dadurch gekennzeichnet, daß** der äußere Endüberzug (3) eine Härte von über 100 KHN aufweist.

11. Prothese gemäß einer der Ansprüche 1, 2 und 4 bis 10, **dadurch gekennzeichnet, daß** die angereicherte Matrix des schalenähnlichen Stützgerüsts (2) und der Überzug (3) als wesentlichen Bestandteil mindestens ein Methacrylat Harz, namentlich Dimethacrylat, aufweist.

12. Prothese gemäß einer der Ansprüche 1 bis 11, **dadurch gekennzeichnet, daß** der äußere Endüberzug (3) an den an der Oberfläche vorhandenen, aus der angereicherten Matrix hervorstehenden oder mit deren Oberfläche bündig abschließenden Fasern der Verstärkung (4) des schalenähnlichen Stützgerüsts (2) haftet.

13. Prothese gemäß einer der Ansprüche 1, 2 und 4 bis 12, **dadurch gekennzeichnet, daß** die erste Schicht des Überzugs (3) in Berührung mit dem schalenähnlichen Stützgerüst (2) aus einem Harz besteht, das den (die) gemeinsamen Komponenten des Überzugs (3) und der organischen Matrix (5) aufweist.

14. Prothese gemäß einer der Ansprüche 1 bis 13, **dadurch gekennzeichnet, daß** die Verstärkung (4) des schalenähnlichen Stützgerüsts (2) aus mindestens einer Schicht Fasergewirk besteht.

15. Prothese gemäß Anspruch 14, **dadurch gekennzeichnet, daß** es sich bei dem für das schalenähnliche Stützgerüst (2) verwendeten Verbundwerkstoff um ein Schichtmaterial bestehend aus einer Vielzahl von Fasergewirkschichten handelt.

16. Prothese gemäß einer der Ansprüche 1 bis 15, **dadurch gekennzeichnet, daß** es sich bei den der Verstärkung (4) des schalenähnlichen Stützgerüsts (2) dienenden Fasern um Fasern aus Glas, Keramik oder Kieselerde handelt.

17. Herstellungsverfahren einer dentalen Prothese gemäß irgendeiner der Ansprüche 1 bis 16, das einen natürlichen Stumpf, ein Implantat oder einen künstlichen Stumpf abdeckt, **dadurch gekennzeichnet, daß**
- ein durch eine angereicherte Matrix vorimprägniertes Gewebestück (7) auf eine Modellform (11) gelegt wird, die den natürlichenStumpf, Implantat oder künstlichen Stumpf nachbildet,
- ein schalenähnliches Stützgerüst, das die Modellform (11) abdeckt, durch Anpressen und dann durch Härtung der Matrix (5) des vorimprägnierten Gewebestücks (7) geformt wird,
- man realisiert in aufeinanderfolgenden Schichten einen Überzug für das schalenähnliche Stützgerüst (2), um einen äußeren Endüberzug (3) zu erhalten, wobei der Überzug (3) mindestens eine Schicht eines Materials aufweist, in dem mindestens eine der wesentlichen Komponenten gleicher Beschaffenheit ist wie mindestens eine der wesentlichen Komponenten der Matrix (5).

18. Verfahren gemäß Anspruch 17, **dadurch gekennzeichnet, daß** die äußere Oberfläche (12) des schalenähnlichen Stützgerüsts (2), bevor sie mit der ersten Schicht des äußeren Endüberzugs (3) überzogen wird, so geschliffen oder abgetragen wird, daß die der Verstärkung dienenden Fasern des Gewebes an der Oberfläche freigelegt werden.

19. Verfahren gemäß Anspruch 17 bzw. 18, **dadurch gekennzeichnet, daß** die erste Schicht des äußeren Endüberzugs (3), die auf dem schalenähnlichen Stützgerüst (2) aufgebracht wird, aus einem Material besteht, das mit dem Material des Überzugs (3) und der Matrix (5) (einen) gemeinsame(n) Komponenten aufweist.

20. Verfahren gemäß einem der Ansprüche 17 bis 19, **dadurch gekennzeichnet, daß** man zum Formen des vorimprägnierten Gewebestücks (7) auf der Modellform (11) eine flexible, für Flüssigkeiten und Gase undurchlässige Membrane durch Differentialdruck auf das vorimprägnierten Gewebestück (7) drückt, wobei dieses an die Modellform (11) andrückt.

21. Verfahren gemäß Anspruch 20, **dadurch gekennzeichnet, daß** man, um zu vermeiden, daß sich eine oder mehrere mit Fluid gefüllte, zwischen der Modellform (11) und der Membrane (9) eingeschlossene Blasen bilden, wird die Membrane (9) allmählich und längsweise über die Oberfläche der Modellform (11) verschiebt, wobei der Differentialdruck kontrolliert ungleich ausgeübt wird.

22. Verfahren gemäß einer der Ansprüche 17 bis 21, **dadurch gekennzeichnet, daß** das Gewebestück (7) vorgeformt wird, dessen mittlere Partie zumindest wahmehmbar konisch ist, bevor es auf ein stumpfförmiges Modell (11) aufgebracht wird.

23. Verfahren gemäß einer der Ansprüche 17 bis 22, **dadurch gekennzeichnet, daß** das Gewebestück (7) aufgebracht und geformt wird, indem es zwischen zwei flexiblen, für flüssige und gasförmige Medien undurchlässigen Membranen (9, 10) eingeschlossen ist und das Ganze unter Differentialdruck eines flüssigen oder gasförmigen Mediums gedrückt wird, um das Gewebestück an die Modellform (11) zu drücken.

## Claims

1. A dental prosthesis designed to cover a natural, implant or artificial stump (1), comprising a support shell (2) covered by an external finishing coating (3) composed of at least one layer comprising a material at least one essential component of which is of the same nature as at least one essential component of a matrix (5) of the support shell (2), the support shell (2) designed to come into contact with the stump (1) being formed by a preimpregnated fabric part (7), forming a composite material constituted by an armature of fibers (4) embedded in said matrix (5), dental prosthesis **characterized in that** the matrix (5) is charged, the support shell (2) presenting an elasticity modulus comprised between 7 GPa and 25 GPa and the external finishing coating (3) being hard and resistant to abrasion and having an elasticity modulus greater than 10 GPa.

2. The dental prosthesis according to claim 1, **characterized in that** said matrix (5) is formed by an charged organic material and **in that** said external coating (3) is formed by organic resin.

3. The dental prosthesis according to claim 1, **characterized in that** said composite material comprises an armature of ceramic fibers (4) embedded in a ceramic powder-based charged matrix (5) and that said coating (3) is formed by a ceramic powder-based material.

4. The dental prosthesis according to one of the claims 1 to 3, **characterized in that** the main component(s) of the coating and of the matrix (5) are of the same nature.

5. The prosthesis according to one of the claims 1 to 4, **characterized in that** the elasticity modulus of the support shell (2) is never different from that of the natural dentine by more or less than 25 %.

6. The prosthesis according to one of the claims 1 to 5, **characterized in that** the elasticity modulus of the coating (3) is comprised between 12 and 26 GPa.

7. The prosthesis according to one of the claims 1 to 6, **characterized in that** the support shell (2) has a tensile strength greater than 120 MPa.

8. The prosthesis according to claim 7, **characterized in that** the support shell (2) has a tensile strength about 200 MPa.

9. The prosthesis according to one of the claims 1 to 8, **characterized in that** the support shell (2) has a compressive strength comprised between 300 and 400 MPa.

10. The prosthesis according to one of the claims 1 to 8, **characterized in that** the external finishing coating (3) has a hardness greater than 100 KHN.

11. The prosthesis according to one of the claims 1, 2 and 4 to 10, **characterized in that** the charged matrix (5) of the support shell (2) and the coating (3) are essentially formed by at least one methacrylate resin, notably a dimethacrylate resin.

12. The prosthesis according to one of the claims 1 to 11, **characterized in that** the external finishing coating (3) adheres to superficial fibers of the armature (4) of the support shell (2) which are flush with or protrude out from the matrix (5).

13. The prosthesis according to one of the claims 1, 2 and 4 to 12, **characterized in that** the first layer of the coating (3) in contact with the support shell (2) is constituted by a resin formed by the common component(s) of the coating (3) and of the organic matrix (5).

14. The prosthesis according to one of the claims 1 to 13, **characterized in that** the armature (4) of the support shell (2) is composed of at least one layer of fiber-meshed fabric.

15. The prosthesis according to claim 14, **characterized in that** the composite material of the support shell (2) is a laminate composed of a plurality of layers of fiber-meshed fabric.

16. The prosthesis according to one of the claims 1 to 15, **characterized in that** the fibers of the armature (4) of the support shell (2) are notably glass, ceramic or silica fibers.

17. A manufacturing method of a dental prosthesis, according to anyone of claims 1 to 16, covering a natural, implant or artificial stump (1), **characterized in that**:
- a fabric part (7) preimpregnated with a charged matrix (5) is placed on a shaping model (11) reproducing the natural, implant or artificial stump (1),
- a support shell covering the shaping model (11) is formed by compression, then by hardening of the matrix (5) of the preimpregnated fabric part (7),
- successive layers of coating are made on the support shell (2) to form an external finishing coating (3), in which the coating (3) is formed by at least one layer of a material, one essential component of which is of the same nature as at least one essential component of the matrix (5).

18. The method according to claim 17, **characterized in that** the external surface (12) of the support shell (2) is subjected to an abrasion or an erosion before the first layer is deposited, to make the fibers of the fabric armature (4) appear at the surface.

19. The method according to one of the claims 17 or 18, **characterized in that** the first layer of external finishing coating (3), placed on the support shell (2) is constituted by a material formed by the common component(s) of the coating (3) and of the matrix (5).

20. The method according to one of the claims 17 to 20, **characterized in that** to form the preimpregnated fabric part (7) on the shaping model (11) a flexible fluid-proof membrane (9) is applied by differential fluid pressure onto the preimpregnated part (7) which is pressed onto the shaping model (11).

21. The method according to claim 20, **characterized in that** to prevent the presence of one or more pockets of fluid trapped between the shaping model (11) and the membrane (9), the membrane (9) is moved progressively and longitudinally over the surface of the shaping model (11) by application of a controlled difference of the differential pressure.

22. The method according to one of the claims 17 to 21, **characterized in that** the part (7) is preformed with its central part at least appreciably conical before placing it on a model (11) in the form of a stump.

23. The method according to one of the claims 17 to 22, **characterized in that** the part (7) is placed and then shaped by being secured between two flexible fluid-proof membranes (9, 10), and by applying the assembly thus formed by differential pressure of a fluid so as to press the part onto the shaping model (11).
